Europäisches Patentamt

European Patent Office

Office européen des brevets

(11) Veröffentlichungsnummer: **0 367 276**
**A1**

## EUROPÄISCHE PATENTANMELDUNG

(21) Anmeldenummer: 89120360.6

(51) Int. Cl.5 **E01H 1/08**

(22) Anmeldetag: 03.11.89

(30) Priorität: 04.11.88 DE 3837907

(43) Veröffentlichungstag der Anmeldung:
09.05.90 Patentblatt 90/19

(84) Benannte Vertragsstaaten:
AT BE CH DE ES FR GB GR IT LI LU NL SE

(71) Anmelder: SCHÖRLING GMBH & CO.
WAGGONBAU
Schörlingstrasse 3
D-3000 Hannover 91(DE)

(72) Erfinder: Leers, Konrad, Dr.-Ing.
Am Bahnhof 10
D-3050 Wunstorf 2(DE)

(74) Vertreter: Thömen, Uwe, Dipl.-Ing.
Patentanwalt U. Thömen Zeppelinstrasse 5
D-3000 Hannover 1(DE)

(54) **Strassenkehrfahrzeug mit einer Saugvorrichtung.**

(57) Ein Ventilator zur Erzeugung eines saugenden Volumenstroms ($V_G$) im Saugschlauch (16) um Kehricht von einer Straßenoberfläche (20) aufzusaugen.

Der Volumenstrom ($V_G$) im Saugschlauch wird mit Hilfe einer die Drehzahl des Ventilators beeinflussenden Regelanordnung auf einen einstellbaren konstanten Sollwert gehalten. Zu diesem Zweck wird eine Druckdifferenz (26, 28) innerhalb des Saugschlauches ermittelt und einem Regelglied für die Einstellung der Drehzahl des Ventilators zugeführt.

FIG. 2

EP 0 367 276 A1

## Straßenkehrfahrzeug mit einer Saugvorrichtung

Die Erfindung betrifft ein Straßenkehrfahrzeug mit einer Saugvorrichtung gemäß dem Oberbegriff des Patentanspruchs 1.

Straßenkehrfahrzeuge dieser bekannten Art arbeiten nach dem Prinzip einer den Schmutz oder Kehricht saugend aufnehmenden Kehrmaschine um beispielsweise die Oberflächen von Straßen zu säübern. Dabei befinden sich in geringem Abstand oberhalb der Straßenoberfläche ein Saugmund, an welchen sich ein Saugschlauch anschließt, der in den Kehrichtsammelraum des Straßenkehrfahrzeuges führt. Die zum Aufsaugen von Kehricht erforderliche Saugvorrichtung um faßt einen Ventilator, um den notwendigen saugenden Volumenstrom im Saugschlauch zu erzeugen.

Bei den bekannten Straßenkehrfahrzeugen der eingangs erwähnten Gattung ist es üblich, die Drehzahl des Ventilators auf der Basis von Erfahrungswerten einmalig fest einzustellen. Während des Betriebes des Straßenkehrfahrzeuges, also während des Kehrvorganges, werden dann keine weiteren automatischen Veränderungen an der Saugvorrichtung mehr vorgenommen.

Der Nachteil dieser bekannten Straßenkehrfahrzeuge besteht darin, daß aufgrund der einmaligen starren Einstellung der Drehzahl des Ventilators keine Möglichkeit besteht, Einfluß auf die jeweils vorhandenen örtlichen Gegebenheiten beim Kehrvorgang zu nehmen. Die einmal eingestellte Drehzahl des Ventilators ist also beispielsweise unabhängig von der Menge des abzusaugenden Kehrichts oder auch von dem Abstand des Saugmundes von der Straßenoberfläche.

So wird beispielsweise bei einer möglichen beginnenden Verstopfung des Saugschlauches in Folge von hohem Anfall von Kehricht die bekannte Saugvorrichtung zwangsläufig dadurch abgedrosselt und in ihrer

Leistung gemindert, daß wegen der Maschinen-Kennlinie des Ventilators der Luftförderstrom bzw. der Volumenstrom innerhalb des Saugschlauches abnimmt, mit der Folge, daß der Aufbau einer beginnenden Verstopfung unterstützt wird und die Saugvorrichtung schließlich vollständig verstopft ist. Außerdem wird durch die abgedrosselte Saugleistung der Kehricht nicht mehr vollständig von der Straßenoberfläche aufgesaugt.

Der Erfindung liegt die Aufgabe zugrunde, die beschriebenen Nachteile zu vermeiden und ein Straßenkehrfahrzeug mit einer Saugvorrichtung zu schaffen, welches unabhängig von den vorhandenen örtlichen Gegebenheiten eine zuverlässige Säüberung der Straßenoberfläche ermöglicht, und welches durch Anpassung an die jeweiligen örtlichen Gegebenheiten einen wirtschaftlichen Betrieb des Straßenkehrfahrzeuges gewährleistet.

Dieses Ziel erreicht die Erfindung bei dem im Oberbegriff des Patentanspruchs 1 genannten Straßenkehrfahrzeug dadurch, daß der Volumenstrom im Saugschlauch mit Hilfe einer die Drehzahl des Ventilators beeinflussenden Regelanordnung auf einen ein stellbaren konstanten Sollwert gehalten ist.

Mit der Regelanordnung wird bei dem Straßenkehrfahrzeug also in neuartiger Weise die Ventilatordrehzahl entsprechend der Kennlinie des Ventilators in der Weise verändert, daß ständig eine konstante Gesamtfördermenge eingehalten wird. Durch die Vorgabe einer gewünschten Fördermenge, die an die jeweilige Kehraufgabe angepaßt werden kann, ist es dann möglich, das Straßenkehrfahrzeug bzw. dessen Saugvorrichtung wesentlich wirtschaftlicher zu betreiben, und zwar auch bei unterschiedlichen Kehrbedingungen. Die Aufnahmevorrichtung paßt sich den inneren Strömungsverhältnissen in der Kehrmaschine an und wird so immer nur die notwendige Minimalleistung vom Antriebsaggregat abnehmen.

Gemäß einer zweckmäßigen Ausgestaltung der Erfindung umfaßt die Regelanordnung zwei Drucksensoren zur Druckmessung innerhalb des Saugschlauches.

Die Erfindung geht davon aus, daß die Strömungsgeschwindigkeit im Saugschlauch in direktem Zusammenhang mit dem gesamten Fördervolumen steht und daß der Druckabfall über die Länge des Saugschlauches proportional dem Fördervolumen ist.

Deshalb läßt sich durch Druckmessungen am Anfang und am Ende des Saugschlauches eine Druckdifferenz bilden, die als Regelgröße verwendet wird, um die Ventilatordrehzahl in dem Sinne zu verändern, daß der Volumenstrom konstant bleibt.

Weitere zweckmäßige Ausgestaltungen und vorteilhafte Weiterbildungen der Erfindung ergeben sich aus den Unteransprüchen, der Zeichnung und der nachfolgenden Beschreibung.

Zum besseren Verständnis wird die Erfindung anhand des in der Zeichnung dargestellten Ausführungsbeispiels näher erläutert.

Es zeigen:

Fig. 1 eine schematische Ansicht eines Straßenkehrfahrzeuges mit einer Saugvorrichtung,

Fig. 2 eine schematische Detail- Darstellung des Saugschlauches,

Fig. 3 die Betriebs-Kennlinie eines Ventilators der Saugvorrichtung, und

Fig. 4 ein Blockschaltbild einer Regelanordnung.

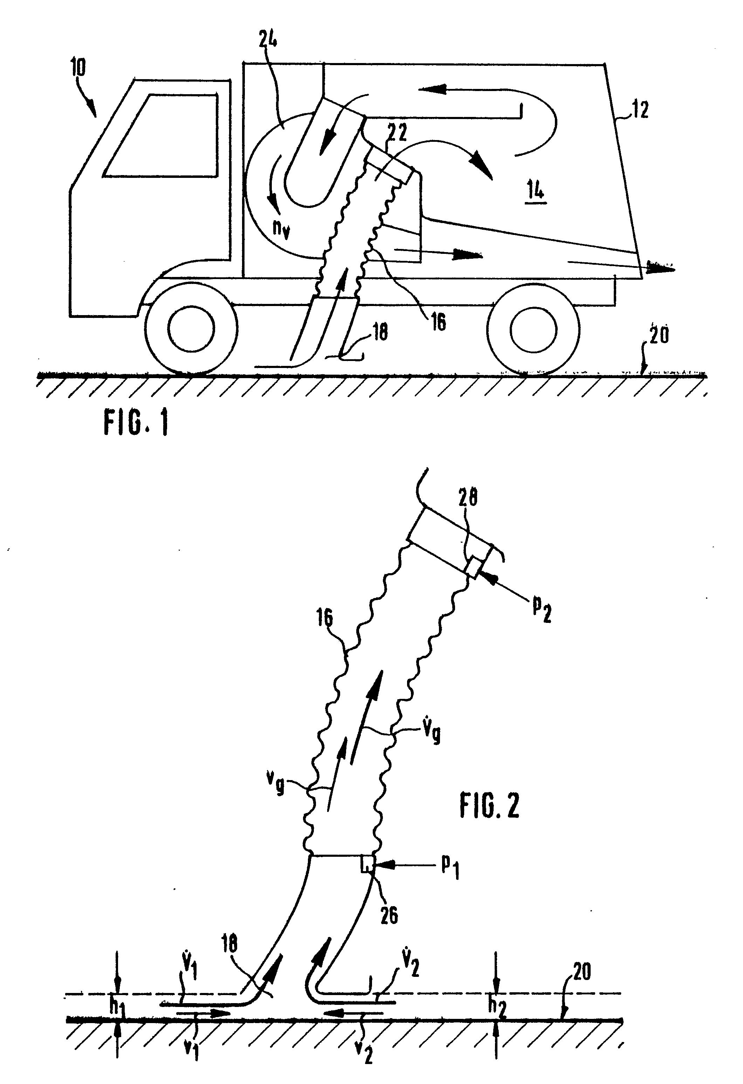

Das in Fig. 1 dargestellte Straßenkehrfahrzeug 10 besitzt einen Kehrmaschinenbehälter 12 mit einem Kehrichtsammelraum 14. In den Kehrichtsammelraum 14 führt von außen ein Saugschlauch 16 mit einem Saugmund 18, der in geringem Abstand über einer Straßenoberfläche 20 angeordnet und gehalten ist.

Im Kehrmaschinenbehälter 12 ist ein Ventilator 24 angeordnet, der eine Saugwirkung über den Saugschlauch 16 erzeugt, um von der Straßenoberfläche 20 dort vorhandenen Kehricht über den Saugmund 18 aufzusaugen und über eine Austrittsöffnung 22 des Saugschlauches 16 in den Kehrichtsammelraum 14 zu befördern. Der Ventilator 24 wird mit Hilfe eines an sich bekannten

Antriebsaggregats angetrieben und auf eine Drehzahl $n_v$ gebracht. Das soweit beschriebene Straßenkehrfahrzeug 10 ist an sich bekannt.

Wie die Detail-Darstellung gemäß Fig. 2 zeigt, sind am unteren und oberen Ende des Saugschlauches 16 jeweils ein Drucksensor 26 und 28 angeordnet, um eine Druckmessung an den betreffenden Stellen durchführen zu können. Der von dem Drucksensor 26 ermittelte Druck ist mit $p_1$ und der von dem oberen Drucksensor 28 ermittelte Druck mit $p_2$ bezeichnet. Durch den Pfeil $\dot{V}_g$ ist der gesamte Volumenstrom im Saugschlauch 16 angedeutet. Dabei bedeutet $\dot{V}_g = \partial v V_g, \partial t$ (also das differenzieren nach der Zeit).

Mit $h_1$ und $h_2$ ist jeweils die Höhe des Saugmundes 18 an der Vorder- und Hinterkante über der Straßenoberfläche 20 bezeichnet, und die Pfeile $v_1$ und $v_2$ deuten die jeweiligen Luftgeschwindigkeiten der angesaugten Luft mit den zugehörigen Volumenströmen $\dot{V}_1$ und $\dot{V}_2$ an.

Für die Arbeitsweise der Saugvorrichtung des Straßenkehrfahrzeuges 10 sind die Strömungsgeschwindigkeiten $v_1$ und $v_2$ des Saugmundes 18 ein entscheidendes Merkmal, denn um Schmutz und Kehricht aufnehmen zu können, müssen bestimmte Mindestgeschwindigkeiten eingehalten werden.

Um den aufgenommenen Kehricht durch den Saugschlauch 16 in den Kehrichtsammelraum 14 zu fördern, muß außerdem eine Mindest-Strömungsgeschwindigkeit im Saugschlauch 16 vorhanden sein. Die Erfindung nutzt den direkten Zusammenhang des Volumenstromes $\dot{V}_g$ mit der Strömungsgeschwindigkeit im Saugschlauch 16, und es wird der Umstand ausgenutzt, daß der mit Hilfe der Drucksensoren 26 und 28 bestimmbare Druckunterschied $\Delta p = p_2 - p_1$ proportional dem Fördervolumen ist.

Unter Bezugnahme auf Fig. 2 gelten also die Beziehungen : $p_2 - p_1 \sim \dot{V}_g = \dot{V}_1 + \dot{V}_2$ • $\dot{V}_1$ ist proportional $v_1$ und $\dot{V}_2$ ist proportional $v_2$. Somit ergibt sich die Beziehung $v_1/v_2 \approx \dot{V}_1/\dot{V}_2 \approx h_1/h_2$.

Um den von der Straßenoberfläche 20 aufgenommenen Kehricht durch den Saugschlauch 16 in den Kehrichtsammelraum 14 zu fördern, muß eine Mindest-Strömungsgeschwindigkeit im Saugschlauch 16 existieren, d.h., es ist ein Mindest-Volumenstrom $\dot{V}$ erforderlich. Dieser Mindest-Volumentstrom kann bei dem neuen Straßenkehrfahrzeug 10 als Sollwert vorgegeben werden.

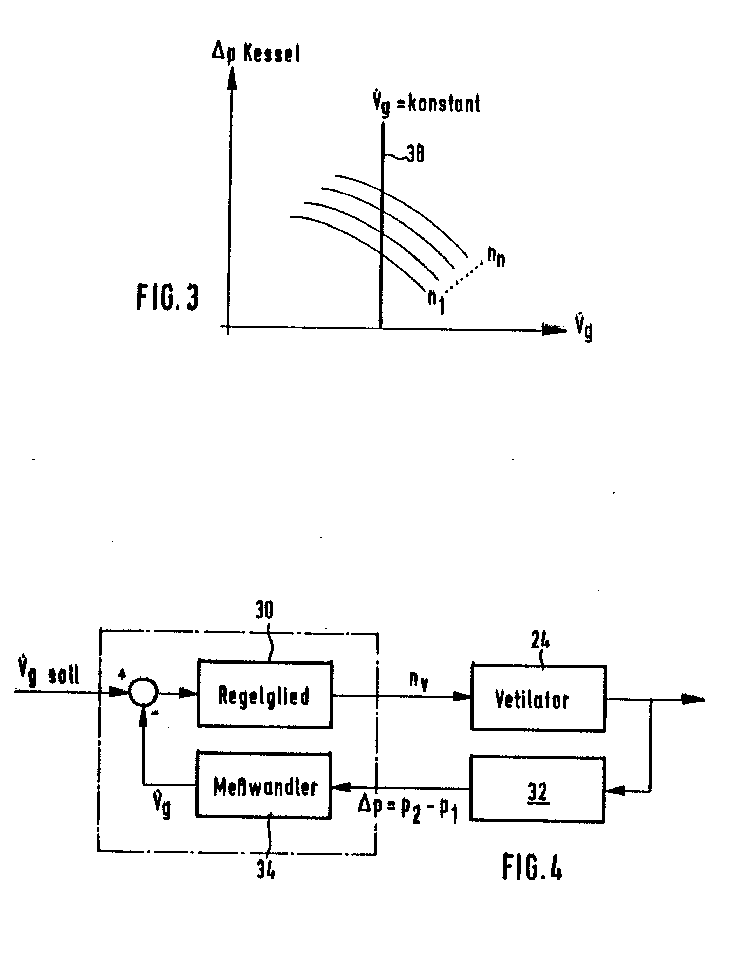

Die in Fig. 3 dargestellte Betriebskennlinie für den Ventilator 24 zeigt den Zusammenhang zwischen der Druckdifferenz $\Delta p$ im Kehrichtbehälter gegenüber der Umgebung und dem Volumenstrom $\dot{V}_g$ bei unterschiedlichen Drehzahlen $n_1 \ldots n_n$. Wie zu erkennen ist, nimmt bei sinkender Druckdifferenz der Volumenstrom zu, wenn eine einmal eingestellte Drehzahl beibehalten wird.

Bei der Erfindung wird demgegenüber der Volumenstrom $\dot{V}_g$ konstant gehalten, was durch die Linie 38 angedeutet ist. Daraus ergibt sich, daß hier die Drehzahl des Ventilators nicht auf einem Wert bleibt, sondern anzuheben oder zu senken ist, um den Volumenstrom in gewünschter Weise auf dem konstanten Wert zu halten.

Die bei dem neuen Straßenkehrfahrzeug 10 vorgesehene Regelanordnung ist in Fig. 4 als Blockschaltbild dargestellt, in welchem ein gewünschter und einstellbarer Sollwert für den Volumenstrom $\dot{V}_g$ vorgegeben ist.

Die Regelanordnung umfaßt neben einem Regelglied 30 ein Meßaufnehmersystem 32 zur Ermittlung der Druckdifferenz $\Delta p = p_2 - p_1$ im Saugschlauch. Diese Druck differenz wird einem Meßwandler 34 zugeführt. Der Meßwandler liefert den Istwert des Volumenstromes $\dot{V}_g$. Der Vergleich mit dem Sollwert gibt dem Regelglied 30 die erforderliche Information, um die Drehzahl $n_v$ des Ventilators 24 in der Weise nachzuregeln, daß der Volumenstrom $\dot{V}_g$ in gewünschter Weise konstant bleibt.

Die Veränderung der Ventilatordrehzahl $n_v$ entsprechend der Kennlinie (Fig. 3) in dem Sinne, daß ständig eine konstante Gesamtfördermenge eingehalten wird, ermöglicht einen wesentlichen wirtschaftlicheren Betrieb der Saugvorrichtung des Straßenkehrfahrzeuges 10.

In dem beschriebenen Ausführungsbeispiel wird davon ausgegangen, für die Einhaltung eines konstanten Volumenstromes die Druckdifferenz innerhalb des Saugschlauches 16 zu ermitteln. Es können aber auch andere Meßorte in an sich bekannter Weise für die Ermittlung der Strömungsgeschwindigkeit gewählt werden, wobei die Strömungsgeschwindigkeit einen Rückschluß auf den Volumenstrom ermöglicht. So ist es beispielsweise möglich, vor oder hinter dem Ventilator 24 entsprechende Meßstellen anzuordnen.

## Ansprüche

1. Straßenkehrfahrzeug mit einer Saugvorrichtung, die einen in den Kehrichtsammelraum des Straßenkehrfahrzeuges führenden Saugschlauch mit einem Saugmund sowie einen Ventilator zur Erzeugung eines saugenden Volumenstroms im Saugschlauch umfaßt, dadurch gekennzeichnet, daß der Volumenstrom $(\dot{V})$ im Saugschlauch (16) mit Hilfe einer die Drehzahl $(n_V)$ des Ventilators (24) beeinflussenden Regelanordnung (30 - 34) auf einen einstellbaren konstanten Sollwert $(\dot{V}_S)$ gehalten ist.

2. Straßenkehrfahrzeug nach Anspruch 1, dadurch gekennzeichnet, daß die Regelanordnung (30 - 34) zwei Drucksensoren (26, 28) zur Druckmessung $(P \cdot; p_2)$ innerhalb des Saugschlauches (16) umfaßt.

3. Straßenkehrfahrzeug nach Anspruch 2, dadurch gekennzeichnet, daß der eine Drucksensor (26) am unteren, sich an den Saugmund (18) anschließenden Ende des Saugschlauchs (16) und der andere Drucksensor (28) am oberen Ende des Saugschlauchs (16) angeordnet ist.

4. Straßenkehrfahrzeug nach Anspruch 2 und oder 3, dadurch gekennzeichnet, daß die Druckdifferenz $(\Delta p)$ der von den Drucksensoren (26, 28) ermittelten Drücke ein Regelglied (30) zur Beeinflussung der Drehzahl $(n_V)$ des Ventilators (24) ansteuert.

FIG. 1

FIG. 2

527/11

FIG. 3

FIG. 4

**Europäisches Patentamt**

**EUROPÄISCHER RECHERCHENBERICHT**

Nummer der Anmeldung

EP 89 12 0360

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 141 376 (R. SEUFFER) * Seite 4, Absatz 4 - Seite 5, Absatz 1; Seite 8, Zeilen 9-19; Figur 2 * | 1-4 | E 01 H 1/08 |
| Y | EP-A-0 234 782 (JOHNSTON ENG.) * Anspruch 1; Figur 2 * | 1-4 | |
| A | US-A-4 021 879 (R.N. BRIGHAM) * Spalte 1, Zeilen 29-35; Spalte 2, Zeilen 7-23; Spalte 2, Zeile 65 - Spalte 3, Zeile 4; Spalte 3, Zeilen 20-29; Spalte 4, Zeilen 52-60; Figur 1 * | 1-4 | |
| A | DE-A-2 032 476 (LICENTIA) * Seite 3, Absatz 3; Seite 6, Absatz 2; Figur 3 * | 1-4 | |
| A | GB-A-2 082 351 (PROGRESS-ELEKTROGERÄTE) * Seite 3, Zeilen 69-94; Ansprüche 1-3; Fig. * | 1-4 | RECHERCHIERTE SACHGEBIETE (Int. Cl.5) |
| A | DE-A-2 538 943 (I. NAGEL) * Seite 2, Zeilen 8-13; Ansprüche 1,3; Fig. * | 1-4 | E 01 H A 47 L G 05 D |

Der vorliegende Recherchenbericht wurde für alle Patentansprüche erstellt

| Recherchenort | Abschlußdatum der Recherche | Prüfer |
|---|---|---|
| DEN HAAG | 06-02-1990 | VERVEER D. |